# DEMANDE DE BREVET EUROPEEN

(11) **EP 0 826 990 A1**
(43) Date de publication de la demande: **04.03.1998**
(21) Numéro de dépôt: 97401982.0
(22) Date de dépôt: 25.08.1997
(51) Int. Cl.: G02B 6/293, G02B 6/14

(54) **Filtre passe-bande inscrit dans un guide d'onde optique**

(30) Priorité: 02.09.1996 FR 9610680
(71) Demandeur: ALCATEL ALSTHOM COMPAGNIE GENERALE D'ELECTRICITE, 75008 Paris (FR)
(72) Inventeur: Bakhti, Fatima, 91120 Palaiseau (FR); Riant, Isabelle, 91120 Palaiseau (FR); Sansonetti, Pierre, 91120 Palaiseau (FR)
(74) Mandataire: Sciaux, Edmond

(57) **Abrégé**

Un filtre passe-bande, inscrit dans un guide d'onde optique, comporte au moins un réseau de Bragg (BG1) créant un couplage entre deux modes de propagation. Selon un mode de réalisation, le pas (s) du réseau est égal à la longueur de battement de ces deux modes, pour créer un couplage co-directionnel pour les modes LP01 et LP0i. Selon un autre mode de réalisation, le réseau couple le mode LP01 à un mode de radiation contradirectionnel quelconque.

Il comporte, au moins en un point de ce réseau, une zone (PS1) où une demi-période du réseau est omise pour créer un déphasage de π entre les deux modes couplés.

## Description

L'invention concerne un filtre passe-bande inscrit dans un guide d'onde optique, ce dernier pouvant être une fibre optique, un guide intégré dans un composant optique semi-conducteur ou dans de la silice.

La formation d'un filtre dans un guide d'onde est connue de la technique antérieure et consiste à inscrire un réseau de Bragg dans ce guide. Pour inscrire un tel réseau dans une fibre optique, l'art antérieur, tel que divulgué dans les brevets américains US-A-4 474 427, US-A-4 725 110, US-A-5 104 209 et US-A-5 367 588 propose plusieurs techniques, chacune se basant sur des modifications locales de l'indice de réfraction obtenues en exposant à un rayonnement ultraviolet modulé spatialement le coeur d'une fibre, dopé typiquement au germanium. Un filtre optique utilisant un tel réseau de Bragg présente un spectre en réflexion comportant un pic centré sur une longueur d'onde appelée longueur d'onde de Bragg. En transmission, un tel filtre présente une bande de réjection correspondant au pic obtenu en réflexion.

L'article intitulé "Long period fiber gratings as band-rejection filters" de A.M. VENGSARKAR et al, paru dans OFC'95, PD4, (1995) décrit un filtre optique réjecteur sous la forme d'un réseau de Bragg à pas long, de l'ordre de la centaine de µm, inscrit dans une fibre optique localement dépourvue de son revêtement. Le pas du réseau est choisi de sorte que le mode fondamental guidé dans le coeur de la fibre se couple, à une longueur d'onde donnée, avec un mode de gaine qui s'atténue ensuite rapidement au fur et à mesure de sa propagation dans la gaine, en raison des fuites à l'interface gaine-revêtement. Le couplage se produisant à une longueur d'onde donnée, fonction du pas du réseau, le réseau se comporte comme un filtre réjecteur dont la bande de réjection est centrée sur cette longueur d'onde de couplage.

La demande de brevet français n°95 14434 décrit un filtre optique passe-bande inscrit dans un guide d'onde, qui comprend trois portions de réseau de Bragg et deux zones intermédiaires. Chaque portion a une longueur d'onde de Bragg égale à la longueur d'onde λp de la bande passante. Le réseau de Bragg a un pas court qui produit un couplage contradirectionnel entre le mode aller et le mode retour du mode fondamental. Chaque zone intermédiaire crée un déphasage de Π entre ces deux modes de propagation.

Pour certaines applications, ce filtre ne procure pas une bande de réjection suffisamment large, de part et d'autre de la bande passante. En outre, il a l'inconvénient de nécessiter en amont un isolateur optique pour arrêter la propagation du mode contradirectionnel.

La demande de brevet français n°96 02620 décrit un filtre passe-bande formé par inscription d'au moins deux réseaux de Bragg à pas long dans une fibre optique. La fibre optique est effilée pour définir deux zones de transition sensiblement adiabatiques délimitant une zone intermédiaire. Un premier réseau de Bragg à pas long est inscrit dans la zone intermédiaire. Un second réseau de Bragg à pas long est inscrit dans la zone de transition qui est du côté recevant un signal optique. L'indice effectif de la fibre dans cette zone décroît le long de cette zone de transition. La présence du second réseau dans cette zone entraîne un couplage entre les modes LP01 et LP02 sur une grande largeur de bande, et il en résulte une réjection sur une grande largeur de bande. Le premier réseau produit un couplage codirectionnel entre les deux modes LP01 et LP02, à une longueur d'onde qui est fonction du pas de ce premier réseau. Il produit un signal de mode LP01 qui transporte la puissance du signal optique entrant, pour les longueurs d'onde de couplage des deux modes par ce premier réseau, et un signal de mode LP02 qui s'atténue par fuite à l'interface gaine-revêtement. Il en résulte une réjection sur une très large bande, à l'exception de la bande définit par le premier réseau. L'ensemble des deux réseaux constituedonc un filtre passe-bande.

La fabrication de ce filtre connu présente l'inconvénient de nécessiter l'inscription de deux réseaux au lieu d'un.

Le but de l'invention est de proposer un filtre passe-bande qui n'ait pas les inconvénients des filtres connus.

Un premier objet de l'invention est un filtre passe-bande inscrit dans un guide d'onde optique, comportant au moins un réseau de Bragg créant un couplage entre deux modes de propagation dans le guide, caractérisé en ce en ce que le pas du réseau est égal à la longueur de battement de ces deux modes, pour créer un couplage codirectionnel entre le mode de propagation LP01 et un mode de propagation LP0i, i étant un nombre entier quelconque ; et en ce qu'il comporte, au moins en un point de ce réseau, des moyens pour créer un déphasage de π entre ces deux modes.

Un second objet de l'invention est un filtre passe-bande inscrit dans un guide d'onde optique, comportant au moins un réseau de Bragg créant un couplage entre deux modes de propagation dans le guide, caractérisé en ce en ce que, pour créer un couplage contradirectionnel entre le mode de propagation LP01 et un mode quelconque de radiation, le réseau est décalé angulairement par rapport à l'axe du guide et son pas est de l'ordre de 0,5 micron ; et en ce qu'il comporte, au moins en un point de ce réseau, des moyens pour créer un déphasage de π entre ces deux modes.

Les filtres ainsi caractérisés présentent l'avantage de ne rien renvoyer en retour, et par conséquent ne nécessitent pas d'isolateur optique en amont.

Selon un mode de réalisation préférentiel, le guide d'onde est une fibre monomode, et le couplage a lieu entre le mode fondamental et un mode de gaine, ou un mode de radiation.

L'invention sera mieux comprise et d'autres caractéristiques apparaîtront à l'aide de la description ci-dessous et des figures l'accompagnant :
- La figure 1 représente un premier exemple de réalisation du filtre selon l'invention.
- La figure 2 représente le graphe de transmission dans ce premier exemple de réalisation du filtre selon l'invention.
- La figure 3 représente un deuxième exemple de réalisation du filtre selon l'invention.
- La figure 4 représente le graphe de transmission dans le deuxième exemple de réalisation du filtre selon l'invention.
- La figure 5 représente un troisième exemple de réalisation du filtre selon l'invention.
- La figure 6 représente le graphe de transmission dans le troisième exemple de réalisation du filtre selon l'invention.

Le premier exemple de réalisation comporte un seul réseau de Bragg BG1. Le réseau BG1 est inscrit par exemple dans une fibre optique, par un procédé classique. Il comporte une zone PS1, appelée zone de déphasage ou saut de phase, et située au milieu de celui-ci ou au voisinage du milieu. Cette zone de déphasage PS1 est réalisée selon un procédé connu, consistant soit en une illumination uniforme de cette zone, soit en sautant spatiallement une demi-période du réseau, lorsque la fibre est exposée à un rayonnement ultraviolet pour l'inscription de ce réseau.

Le pas s du réseau BG1 est choisi tel qu'il crée un couplage codirectionnel entre un mode de propagation de coeur et un mode de propagation de gaine, ces deux modes pouvant être par exemple les modes LP01 et LP02 respectivement. La zone de déphasage PS1 crée un déphasage de π entre ces deux modes, réalisant ainsi un résonateur ouvrant une bande passante dans une bande de réjection qui est plus large que cette bande passante. Le mode de gaine se dissipe à l'interface entre la gaine et le revêtement de la fibre. Il n'y a pas réflexion d'un signal en amont, il n'est donc pas nécessaire de prévoir un isolateur optique.

Pour obtenir ce couplage, le pas s est choisi égal à la longueur de battement de ces deux modes, pour la longueur d'onde souhaitée au centre de la bande-passante du filtre. Le pas est alors dit long, parce qu'il est de l'ordre de plusieurs centaines de microns pour une longueur d'onde de Bragg de l'ordre d'un micron. Le manuel « OPTICAL WAVEGUIDE THEORY, par Allan W. SNYDER et John D. LOVE » éditions Chapman and Hall, New York, page 257, montre que le couplage par un réseau est maximal quand le pas est égal à la longueur de battement entre ces deux modes.

On se fixe la valeur de la variation d'indice qui sera obtenue lors de l'inscription du réseau, puis on fait des simulations pour déterminer le graphe de la transmission pour différentes valeurs de la longueur du réseau. On choisit la longueur qui permet d'obtenir la bande passante souhaitée et une atténuation, dans la bande rejetée, au moins égale à celle souhaitée.

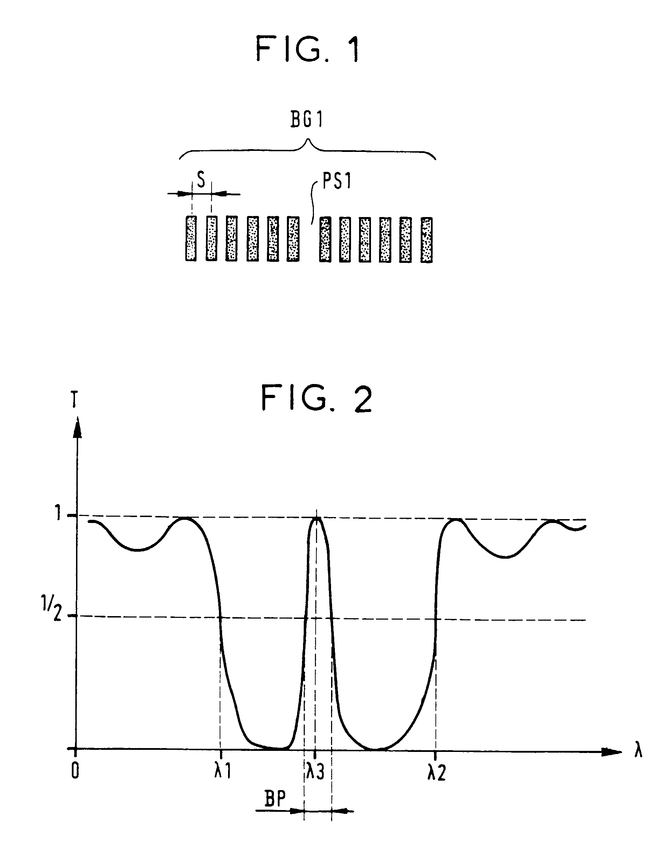

La figure 2 représente le graphe de la transmission T en fonction de la longueur d'onde λ pour un exemple de filtre conforme à la figure 1. Les bandes-passantes sont définies pour une transmission (de puissance) égale à 1/2. La transmission présente un pic centré sur la longueur d'onde λ3 qui est la longueur d'onde de Bragg choisie pour le réseau BG1, avec une largeur de bande passante BP. Le filtre atténue fortement toutes les autres longueurs d'onde dans une bande λ1-λ2 beaucoup plus large que la bande-passante BP, et approximativement centrée sur λ3.

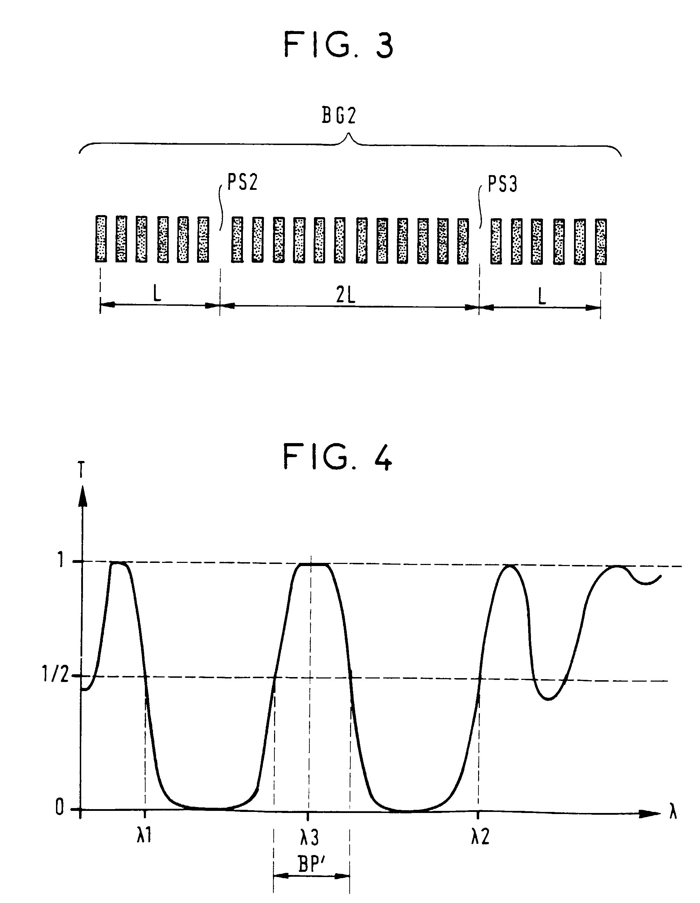

La figure 3 représente un second exemple de réalisation comportant un réseau de Bragg unique BG2 dans lequel deux zones de déphasage de π, PS2 et PS3, ont été aménagées. Elles sont réparties, dans cet exemple, de telle sorte que si 4L est la longueur totale du réseau, la zone PS2 est à une distance L d'une extrémité du réseau, et la zone PS3 est à une distance 3L de cette même extrémité. D'autres dispositions peuvent être expérimentées par simulation pour choisir une disposition qui procure une forme du graphe de transmission qui soit proche de la forme souhaitée.

La figure 4 représente le graphe de la transmission pour cet exemple. Il montre une bande passante BP', autour de la longueur d'onde λ3, qui est élargie par rapport à la bande passante BP du graphe du premier exemple.

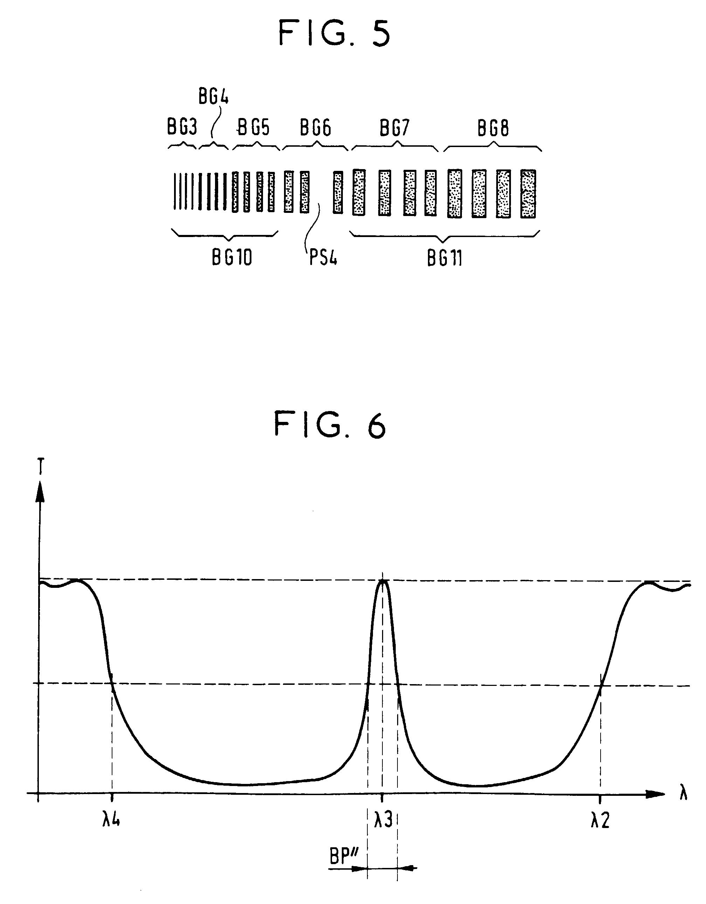

La figure 5 représente schématiquement un troisième exemple de réalisation comportant une pluralité de réseaux de Bragg :
- un réseau central BG6 qui est analogue au réseau BG1 décrit précédemment, c'est à dire comportant une zone de déphasage PS4 ;
- et deux réseaux de Bragg, BG10 et BG11, à pas variables, situés de part et d'autre du réseau BG7, le long du guide d'onde.

Dans cet exemple, les réseaux à pas variables sont chacun constitués de plusieurs réseaux consécutifs, à pas fixes. Respectivement :
- BG3, BG4, BG5 ;
- BG7, BG8.

Les pas de ces réseaux sont voisins et croissent continûment dans l'ordre des réseaux BG3,...,BG8. Les réseaux BG3, BG4, BG5 créent chacun une bande de réjection qui est voisine de la bande de réjection du réseau BG6 et qui élargit celle-ci du côté des longueurs d'onde plus courtes. Les réseaux BG7 et BG8 créent chacun une bande de réjection qui est voisine de la bande de réjection du réseau BG6 et qui élargit celle-ci du côté des longueurs d'onde plus longues.

La figure 6 représente le graphe de la transmission pour cet exemple de réalisation. La bande passante BP'' autour d'une longueur d'onde λ3 est pratiquement la même que si le réseau BG6 était seul. Par contre, la bande de réjection λ4-λ5 est beaucoup plus large que si le réseau BG6 était seul.

Ce troisième exemple de réalisation pourrait aussi être réalisé avec des réseaux BG10 et BG11 à pas variables continûment.

Selon une variante de réalisation, un réseau tel que ceux décrits ci-dessus peut être gravé dans un tronçon de fibre monomode ayant été effilé. Le calcul du pas du réseau doit alors tenir compte du taux de réduction du diamètre de la fibre car ce taux influe sur l'indice effectif de la fibre. Dans un tel dispositif, le couplage entre les modes couplés est plus élevé, ce qui se traduit par une atténuation plus forte dans la bande de réjection.

Selon une variante de réalisation des exemples décrits ci-dessus, le réseau est décalé angulairement par rapport à l'axe de la fibre. Le pas s du réseau est alors choisi de l'ordre de 0,5 micron, afin d'obtenir un couplage contradirectionnel entre un mode guidé et un mode de radiation. Dans cette variante aussi, il n'y a pas de signal renvoyé en amont.

Selon une autre variante, on peut utiliser un réseau de Bragg créant un couplage codirectionnel comme dans l'exemple décrit ci-dessus, mais constitué de composantes qui sont inclinées d'un angle constant par rapport à un plan normal à l'axe de propagation. Un tel réseau couple le mode fondamental avec les modes de radiation de symétrie d'ordre supérieur. Il se comporte comme un filtre réjecteur. Cet angle modifie la forme du graphe de transmission. Cet angle est choisi en faisant des simulations.

Les réseaux de Bragg et les zones de déphasage constituant le filtre selon l'invention peuvent être inscrits en appliquant l'un des procédés connus décrits dans les documents cités dans l'introduction.

## Revendications

1. Filtre passe-bande inscrit dans un guide d'onde optique, comportant au moins un réseau de Bragg (BG1 ; BG2 ; BG6) créant un couplage entre deux modes de propagation dans le guide ;
**caractérisé** en ce en ce que le pas (s) du réseau est égal à la longueur de battement de ces deux modes, pour créer un couplage codirectionnel entre le mode de propagation LP01 et un mode de propagation LP0i, i étant un nombre entier quelconque ;
et en ce qu'il comporte, au moins en un point de ce réseau, des moyens (PS1 ; PS2, PS3 ; PS4) pour créer un déphasage de π entre ces deux modes.

2. Filtre selon la revendication 1, caractérisé en ce que le guide est une fibre optique monomode effilée ; et en ce que le réseau est inscrit dans la partie effilée de cette fibre.

3. Filtre passe-bande inscrit dans un guide d'onde optique, comportant au moins un réseau de Bragg (BG1 ; BG2 ; BG6) créant un couplage entre deux modes de propagation dans le guide ;
**caractérisé** en ce en ce que, pour créer un couplage contradirectionnel entre le mode de propagation LP01 et un mode quelconque de radiation, le réseau est décalé angulairement par rapport à l'axe du guide et son pas (s) est de l'ordre de 0,5 micron ;
et en ce qu'il comporte, au moins en un point de ce réseau, des moyens (PS1 ; PS2, PS3 ; PS4) pour créer un déphasage de π entre ces deux modes.

4. Filtre selon l'une quelconque des revendications 1 ou 3, **caractérisé** en ce que le guide d'onde est une fibre monomode, et en ce que le couplage a lieu entre le mode fondamental et un mode de gaine, ou un mode de radiation.

5. Filtre selon l'une quelconque des revendications 1 à 3, **caractérisé** en ce que chaque moyen (PS1 ; PS2, PS3 ; PS4) pour créer un déphasage de Π est constitué par l'absence d'une demi-période du réseau.

6. Filtre selon l'une quelconque des revendications 1 ou 3, **caractérisé** en ce qu'il comporte en outre au moins un second réseau de Bragg (BG3, BG4, BG5, BG7, BG8) ayant un pas différent mais voisin de celui du premier réseau (BG6) pour rejeter des longueurs d'onde voisines de celles rejetées par le premier réseau (BG6).

7. Filtre selon la revendication 6, **caractérisé** en ce que le second réseau (BG10 ; BG11) est un réseau de Bragg à pas variable de manière discrète, constitué d'une pluralité de réseaux (BG3, BG4, BG5 ; BG7, BG8) dont les pas respectifs sont constants mais différents les uns des autres.

8. Filtre selon la revendication 6, **caractérisé** en ce que le second réseau est un réseau de Bragg à pas variable de manière continue.
